# EUROPEAN PATENT SPECIFICATION

(11) **EP 4 263 253 B1**
(45) Date of publication and mention of the grant of the patent: **21.08.2024**
(21) Application number: 22704070.6
(22) Date of filing: 20.01.2022
(51) Int. Cl.: B60J 5/04, B60J 5/10

(54) **MULTILAYERED TETHER LINK FOR LIFTGATE**
MEHRSCHICHTIGES ANHALTEGLIED FÜR HECKKLAPPE
LIEN D'ATTACHE MULTICOUCHE POUR HAYON

(30) Priority: 20.01.2021 US 202163139326 P
(43) Date of publication of application: 25.10.2023
(73) Proprietor: Magna Exteriors Inc., Concord, Ontario L4K 4J5 (CA)
(72) Inventor: FRANZEN, Trevor, Pleasant Ridge, MI 48069 (US); FULCHER, Jason, Orion, MI 48360 (US)
(74) Representative: Glawe, Delfs, Moll
(86) International application number: PCT/US2022/013071
(87) International publication number: WO 2022/159551

(56) References cited:
- EP-A1- 3 670 274
- WO-A1-2013/055656
- WO-A1-2019/006271
- CN-A- 108 263 182
- US-A- 5 362 101

## Description

### FIELD OF THE INVENTION

The present invention relates to a tether component and method of manufacturing the tether component, which is implemented in a liftgate for an automobile.

### BACKGROUND OF THE INVENTION

One of the current trends in the automobile industry is to lower vehicle weight to help achieve better fuel economy, thus helping to meet fuel economy standards and to offset the higher fuel prices. Another trend is that there is a broader range of vehicle models, which in turn reduces the volume of vehicles produced on a per model basis. Litigates are traditionally made from stamped steel panels that are heavy and have a high tooling cost and are susceptible to corrosion. Sheet Molding Compound (SMC) is an alternative to steel for the inner and outer panels of the liftgate. Using SMC has several manufacturing concerns related to the material and process. Steel and SMC liftgates have a mass penalty over thermoplastics. There are also styling restrictions with traditional sheet metal and SMC components.

In certain applications where liftgates are made from composite materials. Tethers made from steel are used to strengthen the liftgate and help maintain the integrity of the liftgate upon impact. The use of steel tethers can be difficult to attach and increase the assembly complicity. It is therefore desirable to design liftgates that have tether systems that are easier to assemble, require less attachment points and still provide the desired level of strength to the liftgate while allowing for maintaining the integrity of the liftgate upon impact.

Over molded ends are sometimes used in flexible tether arrangements such as with belt materials or wires to help the fibers of the tether in such a way that the integrity and strength of the individual fibers is preserved. However, overmolding processes are costly and time consuming because of added tooling and labor costs during manufacture. It is further a desirable to provide a tether system that is flexible and is connected to the liftgate panel through apertures without the necessity of overmolding. It is also desirable to provide a tether system that has failure modes, such as a controlled release failure mode.

It is desirable to develop lower cost tethers that would reduce or eliminate overmolding to the tether belt material but still provide the desired performance. Therefore, it is a goal to provide a lightweight, consistent failure mode tether using more readily available materials to keep costs down.

US 5,362,101 discloses an airbag comprising straps with folded portions.

### SUMMARY OF THE INVENTION

The present invention relates to a multilayered tether link comprising the features of claims 1 and 12, respectively. The tether has two ends and connects to a vehicle part using a folded wedge section and a folded section of the tether. There is a folded wedge section formed by a tether belt material being sinuously being folded about at least one wedge portion. The tether belt material and the at least one wedge portion are sewn together with at least one stitch to form a layered construction. The layered construction has a hole is formed through the layered construction for attachment to a vehicle part.

The multilayered tether link further includes a folded section having a plurality of layers of sinuously folded tether belt material folded adjacently to form a plurality of layers. The folded section further includes at least one stitch connecting the plurality of layers together. Also provided is a hole formed through the center of the folded section for attachment to a vehicle part. The vehicle part can be any component of the liftgate and can include the liftgate inner panel, wiper motor housing, support brackets, outer panel of the liftgate, latch mounting bracket or latch actuator housing.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a rear elevational view of a liftgate inner panel having a multilayered tether link connected thereon.
Fig. 2 is an enlarged rear elevational view of the multilayered tether link end of the present invention installed on a liftgate of a vehicle.
Fig. 3 is a cross-sectional side elevation view of a folded wedge section of the multilayered tether link in accordance with the present invention.
Fig. 4 is a cross-sectional side elevation view of a folded section of the multilayered tether link in accordance with the present invention.
Fig. 5 is top side perspective view of wedge portion.
Fig .6A is a top cross-sectional view of a prior art overmolded tether link connected to a vehicle part.
Fig. 6B is a top cross-sectional view of a multilayered tether link connected to a vehicle part in accordance with one embodiment of the invention.
Fig. 6C is a top cross-sectional view of a multilayered tether link connected to a vehicle part in accordance with another embodiment of the invention.
Fig. 7 is a top plan view of a tether according to one embodiment of the invention.
Fig. 8A is an enlarged perspective view of an alternate tether according to an alternate embodiment of the invention.
Fig. 8B is an enlarged perspective view of an alternate tether according to an alternate embodiment of the invention.

### DETAILED DESCRIPTION OF THE PREFERRED EMBODIMENTS

The following description of the preferred embodiments is merely exemplary in nature and is in no way intended to limit the invention, its application, or uses.

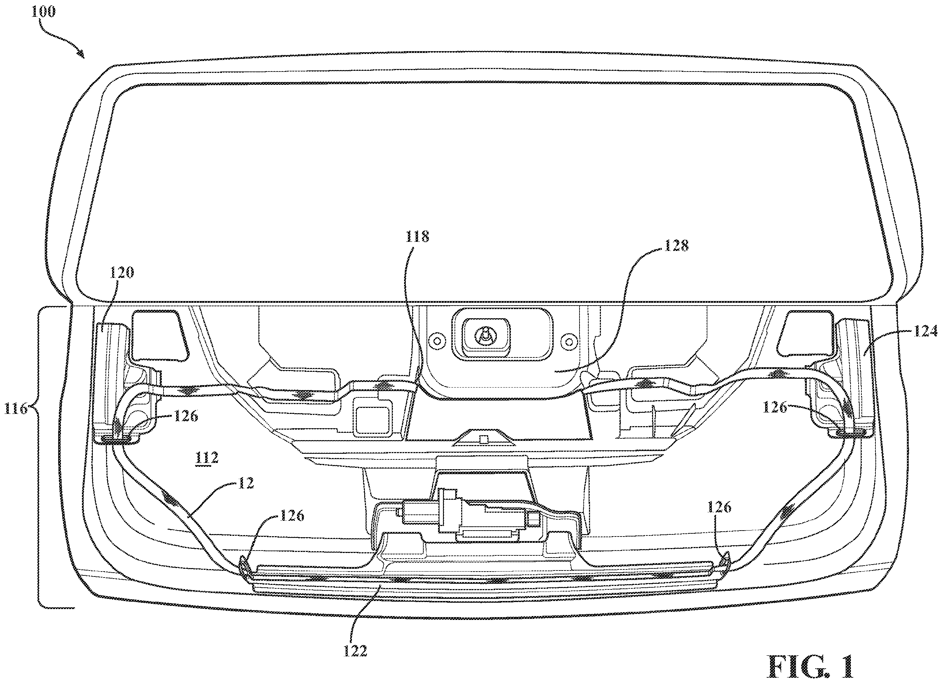

Referring now to Fig. 1 there is shown a structural inner panel 100 of a vehicle liftgate. The structural inner panel 100 has an outside surface 112 and an inner surface. The structural inner panel 100 is covered by an outer panel or outer panels (not shown) that have an exterior show surface. The liftgate structure, and the structural inner panel 100 are made of composite material, however, it is within the scope of this invention for different materials to be used such as aluminum, manufactured diecast, metal, etc. The structural inner panel 100 has a lower perimeter surface area 116 extending across substantially the entire width of the structural inner panel 100. The structural inner panel 100 also includes a wiper motor housing recess 118 for holding a wiper motor. Also included is a plurality of brackets including a left side bracket 120, a center lower bracket 122 and a right side bracket 124. It is within the scope of this invention for a greater or fewer number of brackets to be implemented depending on the particular application. The plurality of brackets are connected to the outside surface 112 of the structural inner panel 100. Each of the plurality of brackets also include one or more friendly holes 126, which are apertures through the respective brackets that allow for a tether 12 to pass through. The friendly holes 126 each have a curled edge that creates a smooth edge to prevent any snagging of the tether 12 material.

The tether 12 includes two ends each for connecting the tether 12 to a vehicle part, which in the current embodiment of the invention is a wiper motor housing 128 in the wiper motor housing recess 118. The tether 12 is positioned through each of the friendly holes 126 of each of the plurality brackets 120, 122, 124.

While the present embodiment of the invention depicts the tether 12 as being routed through various bracket members, it is within the scope of this invention for the friendly holes 126, to be formed with the structural inner panel 100, thereby eliminating the need for different brackets 120, 122, 124. Additionally, the placement of the brackets 120, 122, 124 are located in predetermined tether reinforcement zones, which are areas on the structural inner panel 100 that are determined to be structurally stronger areas of the liftgate than the portions of the inner panel not located in the tether reinforcement zones. The tether reinforcement zones are best for placement of connections for the tether 12. The structural reinforcement zones allow for the tether 12 to span areas of the composite liftgates that are structurally weaker and will benefit from having the tether 12 passing across the weaker area to be connected to the tether reinforcement zones of the liftgate. The location of the tether reinforcement zones can vary depending upon the design of the liftgate. Factors such as shape, material thickness, material makeup and the dimensions of the liftgate can have an effect on the location of the tether reinforcement zone. Routing the tether 12 between each tether reinforcement zones causes the tether 12 to cross weaker areas of the liftgate to create a type of safety net that will hold the structural inner panel together in the event of breaking of the structural inner panel in the weaker areas between the tether reinforcement zones.

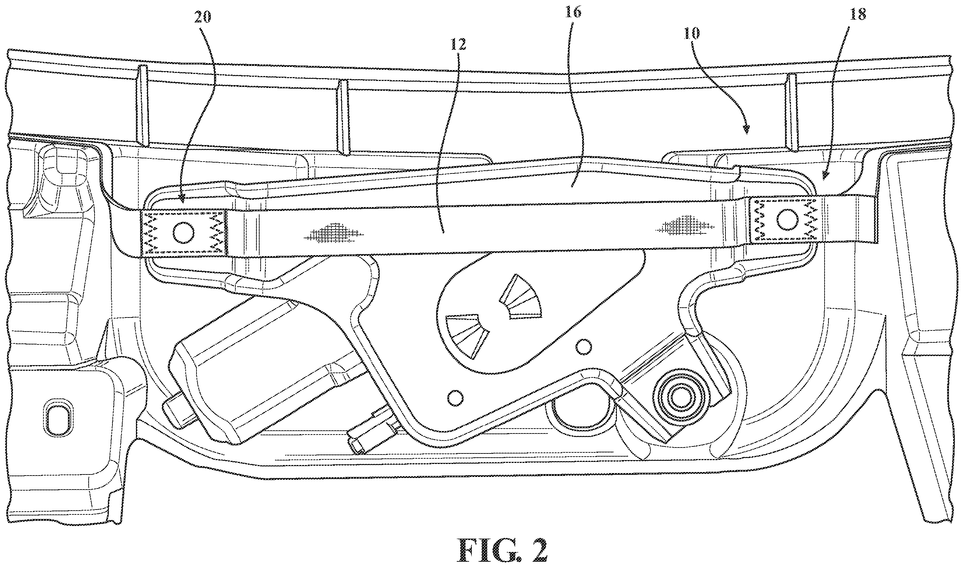

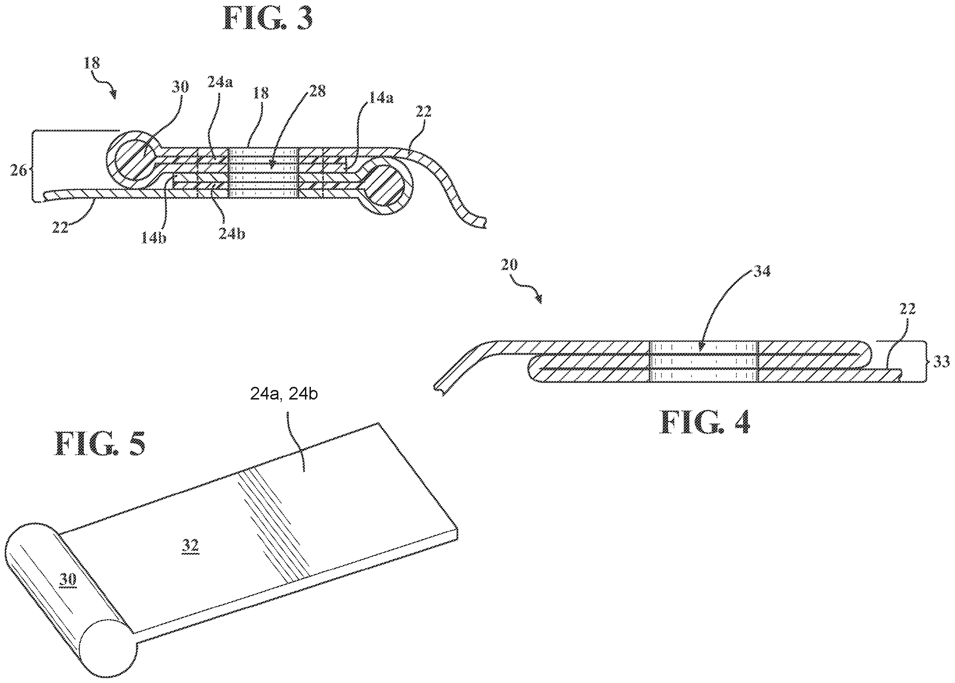

The tether 12 has a specialized construction forming part of a multilayered tether link that is shown in figures 2-5, 6B and 7 will now be described in greater detail. The tether 12 has two ends 14a, 14b that connect to a vehicle part 16 using a folded wedge section 18 and a folded section 20 of the tether 12. The folded wedge section 18 is formed by a tether belt material 22 being sinuously folded about at least one wedge portion, which the present embodiment of the invention uses two wedge portions 24a, 24b. Each wedge portion 24a, 24b is preferably a polymer plastic material such as a thermoplastic olefin material. The tether belt material 22 can be any suitable material, however, in one embodiment of the invention the tether belt material 22 is polyester or mylar material.

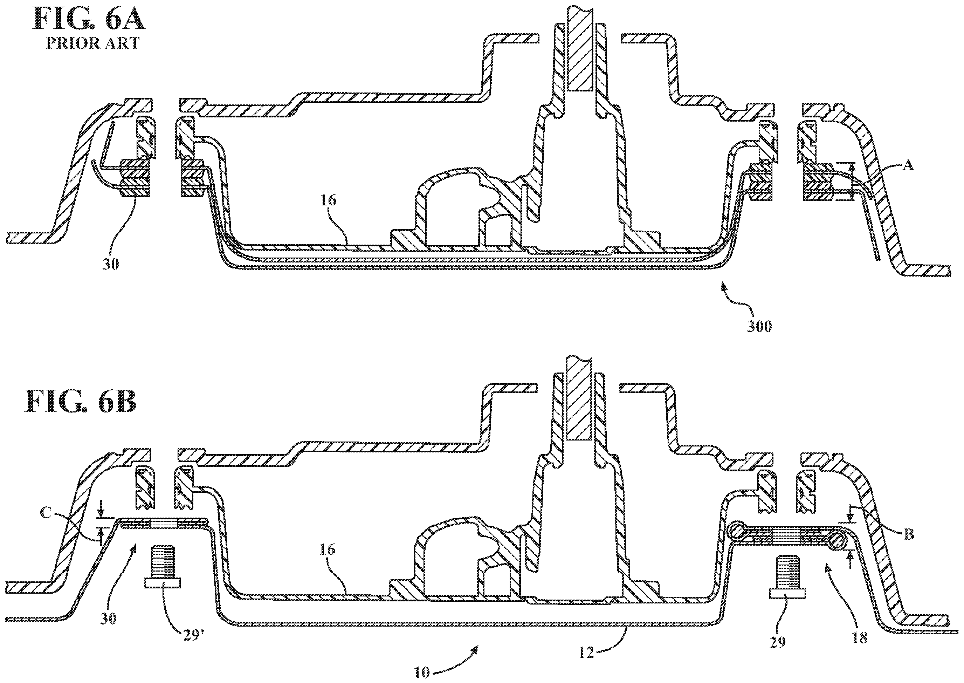

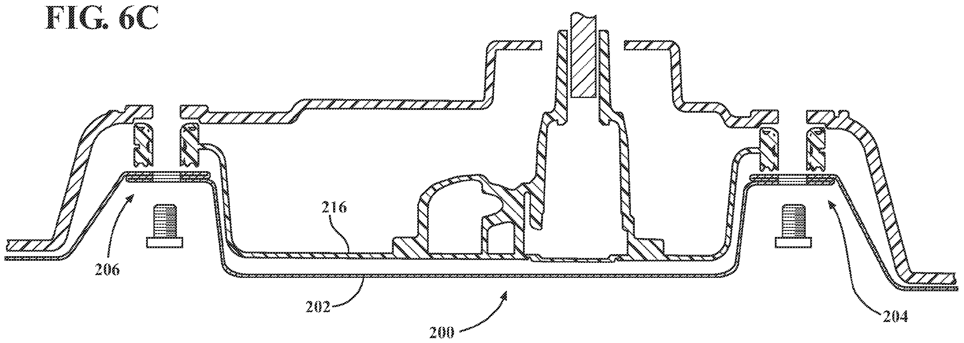

As shown the tether 12 has an end 14a that is folded about wedge portion 24a, while end 14b is folded about wedge portion 24b. The wedge portions 24a, 24b are used in the present embodiment of the invention, but they are optional and in some embodiments of the invention they are not used due to the requirements of a particular design. For example, Fig. 6C shows a multilayered tether link 200 with a tether 202 that has a first folded section 204 and a second folded section 206 are connected to a vehicle part 216. Both the first folded section 204 and second folded section 206 do not have any wedge portions that are present in the multilayered tether link 10 embodiment shown in Fig. 6B.

Referring back to Figs. 1-5, 6B and 7, the tether belt material 22 and the two wedge portions 24a, 24b are sewn together with at least one stitch to form a layered construction 26. The layered construction 26 has a hole 28 formed through the layered construction 26 for attachment to a vehicle part 16. The hole 28 is formed ultrasonically using heat knife that prevents fraying. The hole 28 is configured to allow a fastener 29 to pass through the layered construction 26 for connecting the tether 12 to the vehicle part 16. The wedge portions 24a, 24b are designed to transfer the force loads between the tether 12 and the stitching in a more consistent manner. Each of the two wedge sections 24a, 24b include a widened end portion 30 and a flat portion 32. The widened end portion 30 has a round cross-section and the tether belt material 22 wraps around the radius the widened end portion 30 when forming the layered construction 26. This helps to eliminate a flat edge in the area where the tether belt material 22 wraps around the wedge section 24a, 24b, which if a flat edge were present could cut the tether belt material 22 and cause failure when force is exerted on the multilayered tether link 10 during a vehicle accident.

The multilayered tether link 10 further includes a folded section 20 having a plurality of layers of sinuously folded tether belt material folded adjacently to form a layered construction 33. In a preferred embodiment the belt material 22 of the folded section is wound in sinusoidally upon itself to provide an 's' type arrangement. The folded section further includes at least one stitch connecting the plurality of layers together. Also provided is a hole 34 formed through the center of the layered construction 33 for attachment to the vehicle part 16. The hole 34 is formed ultrasonically using heat knife that prevents fraying. The vehicle part 16 can be any component of the liftgate and can include the liftgate inner panel, wiper motor housing, support brackets, outer panel of the liftgate, latch mounting bracket or latch actuator housing.

The vehicle part 16 can be any component of a liftgate for a vehicle and can include the liftgate inner panel, wiper motor housing, support brackets, outer panel of the liftgate, latch mounting bracket or latch actuator housing. Regarding the tether belt material 22, Suitable tether belt materials are selected from the group of woven materials including polyester, nylon, aramid fibers including para-phenylene-terephtalamide, each alone or in combination.

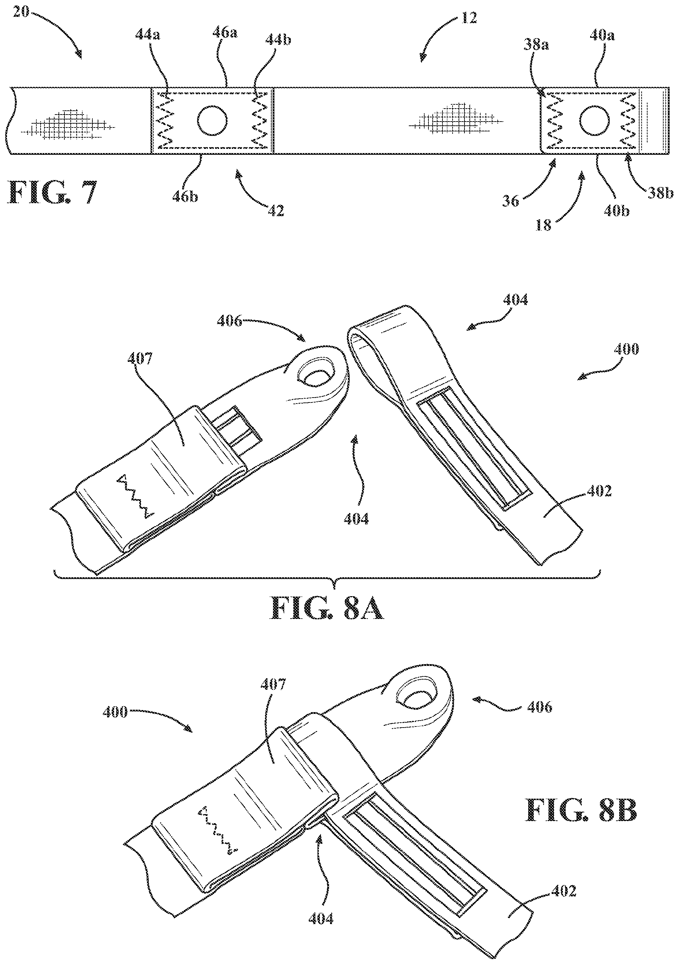

The multilayered tether link 10 is connected to the vehicle part 16 it will provide controlled release of the tether 12 upon experiencing force of an impact of accident. The controlled release of the tether 12 is provided by the combination of the folding of the tether belt material 22 in the area of the folded wedge section 18 and the at least one stitch forming the layered construction 26 of the folded wedge section 18, and the folded section 20 and the at least one stitch forming the layered construction 33. Referring now to Fig. 7 the stitch details on the tether 12 are shown and described. The folded wedge section 18 has at least one stitch 36 generally shown. The at least one stitch 36 includes two tight stitch sections 38a, 38b that are joined at opposing ends by two load transfer stitch sections 40a, 40b. Similarly, the folded section 20 has at least one stitch 42 generally shown. The at least one stitch 42 includes two tight stitch sections 44a, 44b that are joined at opposing ends by two load transfer stitch sections 46a, 46b. During an adverse event such as a vehicle crash where force is applied to the tether 12, forces act on each tightstitch section 38a, 38b, 44a, 44b with each load transfer stitch section 40a, 40b, 46a, 46b transferring load between the respective tight stitch section 38a, 38b, 44a, 44b in order to control the unravelling of the tether 12 and to maximize the absorbance of unwanted forces.

The multilayered tether link 10, 200 shown in Figs. 1-5, 6b, 6C and 7 provide a significant packaging and force absorption advantage over applications the use an overmolded tether. For example, Fig. 6A shows a prior art overmolded tether 300 connected to the liftgate. As shown the overmolded portions of the tether 300 has overmolded connection features that have a stack height A. Fig. 6B shows that the tether 12 has a stack height B for the folded wedge section 18 and a stack height C for the folded section 20. Both the stack height B and stack height C are much smaller than the stack heigh A attained using the tether 300 with overmolding. The tether 10, 200 have a distinct packaging advantage over tether 300.

Referring now to Figs 8A and 8B an alternate tether 400 design is shown. The tether 400 has a loop end 404 with an aperture formed by a loop of the tether material. An eyelet end 406 of the tether 400 has an aperture for receiving a fastener for connecting the tether 400 to a vehicle part. During connection, the eyelet end 406 is passed through the loop end 404 and secured to the vehicle part. A stopper fold 407 on the eyelet end is created by folding the tether belt material and stitching it together. The loop end 404 is held in place between the stopper fold 407 and the fastened down eyelet end 406.

## Claims

1. A multilayered tether link (10) for a vehicle tether (12) comprising:
a tether belt material (22) **characterized by** having a folded wedge section (18) formed by the tether belt material (22) being sinuously folded about at least one wedge portion (24a, 24b), wherein the tether belt material (22) and the at least one wedge portion (24a, 24b) are sewn together with at least one stitch (36) to form a layered construction (26) and a hole (28) is formed through the layered construction (26) for attachment to a vehicle part (16).

2. The multilayered tether link (10) of claim 1, comprising a folded section (20) having a plurality of layers of sinuously folded tether belt material (22) folded adjacently to form a layered construction (33), where the layered construction (33) of the folded section (20) includes at least one stitch (42) connecting the plurality of layers together and a hole (34) formed through the center of the folded section (20) for attachment to a vehicle part (16).

3. The multilayered tether link (10) of claim 1 or 2, wherein the at least one wedge portion (24a, 24b) has a flat portion (32) and a widened end portion (30), where the tether belt material (22) wraps around the widened end portion (30) and the hole (28) is formed through the flat portion (32).

4. The multilayered tether link (10) of claim 1 or 2, further comprising:
wherein the at least one wedge portion (24a, 24b) of the folded wedge section (18) includes a first wedge portion (24a) and a second wedge portion (24b), wherein a first end (14a) of the tether belt material (22) is wound around the first wedge portion (24a) and a second end (14b) of the tether belt material (22) is wound around the second wedge portion (24b), and the first wedge portion (24a) with the tether belt material (22) of the first end (14a) are placed adjacent the second wedge portion (24b) with the tether belt material (22) of the second end (14b) wound around the second wedge portion (24b) to create the layered construction (26), and
the hole (28) is formed through the layered construction (26).

5. The multilayered tether link (10) of claim 4, wherein the first wedge portion (24a) and the second wedge portion (24b) each have a flat portion (32) and a widened end portion (30), where the first end (14a) of the tether belt material (22) wraps around the widened end portion (30) of the first wedge portion (24a) and the hole (28) is formed through the flat portion (32), the second end (14b) of the tether belt material (22) wraps around the widened end portion (30) of the second wedge portion (24b) and the hole (28) is formed through the flat portion (32).

6. The multilayered tether link (10) of claim 1, wherein the at least one stitch (36) of the layered construction (26) is releasable if a predetermined amount of force is experienced by the tether belt material (22).

7. The multilayered tether link (10) of claim 1 or 2, wherein the hole (28) in the folded wedge section (18) is formed ultrasonically, or wherein the hole (28) in the folded wedge section (18) and the hole (34) in the folded section (20) are formed ultrasonically.

8. The multilayered tether link (10) of claim 1 or 2, wherein the tether belt material (22) is one of a polyester or mylar material that is cut with a heat knife to prevent fraying.

9. The multilayered tether link (10) of claim 2, wherein the folded section (20) includes a portion of the tether belt material (22) being folded twice back on the tether belt material (22) and sewn together for forming a three layered construction (33).

10. The multilayered tether link (10) of claim 9, wherein the hole (34) in the folded section (20) is ultrasonically cut through the three layered construction (33)

11. The multilayer tether link of claim 1 or 2, wherein the at least one stitch (36) of the folded wedge section (18) includes at least two tight stitch sections (38a, 38b) joined by at least one load transfer stitch section (40a, 40b) to provide a controlled break at a predetermined force.

12. A multilayered tether link (200) for a vehicle tether (202) comprising:
a first folded section (204) having a plurality of layers of sinuously folded tether belt material (22) folded adjacently to form a layered construction (33), where the layered construction (33) of the folded section includes at least one stitch (42) connecting the plurality of layers together and **characterized by** a hole (34) formed through the center of the first folded section (204) for attachment to a vehicle part (216), and by
a second folded section (206) having a plurality of layers of sinuously folded tether belt material (22) folded adjacently to form a layered construction (33), where the layered construction (33) of the folded section includes at least one stitch (42) connecting the plurality of layers together and a hole (34) formed through the center of the second folded section (206) for attachment to a vehicle part (216).

13. The multilayered tether link (200) of claim 12, wherein the hole (34) in the first folded section (204) and the hole (34) in the second folded section (206) are formed ultrasonically, or wherein the tether belt material (22) is one of a polyester or mylar material that is cut with a heat knife to prevent fraying.

14. The multilayered tether link (200) of claim 12, wherein the second folded section (206) both include a portion of the tether belt material (22) being folded twice back on the tether belt material (22) and sewn together for forming a three layered construction (33).

15. The multilayer tether link of claim 12, wherein the at least one stitch (42) of the first folded section (204) and the at least one stitch (42) of the second folded section (206) each include at least two tight stitch sections (44a, 44b) joined by at least one load transfer stitch section (46a, 46b) to provide a controlled break at a predetermined force.

## Patentansprüche

1. Mehrlagiges Haltegurtglied (10) für einen Fahrzeughaltegurt (12), umfassend:
ein Haltegurtmaterial (22) **gekennzeichnet durch** einen gefalteten Keilabschnitt (18), der dadurch gebildet ist, dass das Haltegurtmaterial (22) wellenförmig um mindestens einen Keilabschnitt (24a, 24b) gefaltet ist, wobei das Haltegurtmaterial (22) und der mindestens eine Keilabschnitt (24a, 24b) mit mindestens einer Naht (36) zusammengenäht sind, um eine geschichtete Konstruktion (26) zu bilden, und ein Loch (28) durch die geschichtete Konstruktion (26) zur Befestigung an einem Fahrzeugteil (16) gebildet ist.

2. Mehrlagiges Haltegurtglied (10) nach Anspruch 1, das einen gefalteten Abschnitt (20) mit einer Anzahl von Lagen aus wellenförmig gefaltetem Haltegurtmaterial (22) aufweist, die nebeneinander gefaltet sind, um eine Lagenkonstruktion (33) zu bilden, wobei die Lagenkonstruktion (33) des gefalteten Abschnitts (20) mindestens eine Naht (42), die die Anzahl von Lagen miteinander verbindet, und ein durch die Mitte des gefalteten Abschnitts (20) gebildetes Loch (34) zur Befestigung an einem Fahrzeugteil (16) aufweist.

3. Mehrlagiges Haltegurtglied (10) nach Anspruch 1 oder 2, wobei der mindestens eine Keilabschnitt (24a, 24b) einen flachen Abschnitt (32) und einen verbreiterten Endabschnitt (30) aufweist, wobei das Haltegurtmaterial (22) um den verbreiterten Endabschnitt (30) gewickelt ist und das Loch (28) durch den flachen Abschnitt (32) gebildet ist.

4. Mehrlagiges Haltegurtglied (10) nach Anspruch 1 oder 2, das außerdem umfasst:
wobei der mindestens eine Keilabschnitt (24a, 24b) des gefalteten Keilabschnitts (18) einen ersten Keilabschnitt (24a) und einen zweiten Keilabschnitt (24b) umfasst, wobei ein erstes Ende (14a) des Haltegurtmaterials (22) um den ersten Keilabschnitt (24a) gewickelt ist und ein zweites Ende (14b) des Haltegurtmaterials (22) um den zweiten Keilabschnitt (24b) gewickelt ist, und der erste Keilabschnitt (24a) mit dem Haltegurtmaterial (22) des ersten Endes (14a) neben dem zweiten Keilabschnitt (24b) angeordnet ist, wobei das Haltegurtmaterial (22) des zweiten Endes (14b) um den zweiten Keilabschnitt (24b) gewickelt ist, um die geschichtete Konstruktion (26) zu bilden, und
das Loch (28) durch die geschichtete Konstruktion (26) hindurch gebildet ist.

5. Mehrlagiges Haltegurtglied (10) nach Anspruch 4, wobei der erste Keilabschnitt (24a) und der zweite Keilabschnitt (24b) jeweils einen flachen Abschnitt (32) und einen verbreiterten Endabschnitt (30) aufweisen, wobei das erste Ende (14a) des Haltegurtmaterials (22) um den verbreiterten Endabschnitt (30) des ersten Keilabschnitts (24a) gewickelt ist und das Loch (28) durch den flachen Abschnitt (32) hindurch ausgebildet ist, das zweite Ende (14b) des Haltegurtmaterials (22) sich um den verbreiterten Endabschnitt (30) des zweiten Keilabschnitts (24b) wickelt und das Loch (28) durch den flachen Abschnitt (32) hindurch ausgebildet ist.

6. Mehrlagiges Haltegurtglied (10) nach Anspruch 1, wobei die mindestens eine Naht (36) der geschichteten Konstruktion (26) lösbar ist, wenn das Haltegurtmaterial (22) eine vorbestimmte Kraft erfährt.

7. Mehrlagiges Haltegurtglied (10) nach Anspruch 1 oder 2, wobei das Loch (28) in dem gefalteten Keilabschnitt (18) durch Ultraschall gebildet wird oder wobei das Loch (28) in dem gefalteten Keilabschnitt (18) und das Loch (34) in dem gefalteten Abschnitt (20) durch Ultraschall gebildet werden.

8. Mehrlagiges Haltegurtglied (10) nach Anspruch 1 oder 2, wobei das Material des Haltegurtes (22) ein Polyester- oder Mylarmaterial ist, das mit einem Heißmesser geschnitten wird, um ein Ausfransen zu verhindern.

9. Mehrlagiges Haltegurtglied (10) nach Anspruch 2, wobei der gefaltete Abschnitt (20) einen Teil des Haltegurtmaterials (22) umfasst, der zweimal auf das Haltegurtmaterial (22) zurückgefaltet und zusammengenäht ist, um eine dreilagige Konstruktion (33) zu bilden.

10. Mehrlagiges Haltegurtglied (10) nach Anspruch 9, wobei das Loch (34) in dem gefalteten Abschnitt (20) mit Ultraschall durch die dreischichtige Konstruktion (33) geschnitten wird.

11. Mehrlagiges Haltegurtglied nach Anspruch 1 oder 2, wobei die mindestens eine Naht (36) des gefalteten Keilabschnitts (18) mindestens zwei enge Nahtabschnitte (38a, 38b) umfasst, die durch mindestens einen Lastübertragungsnahtabschnitt (40a, 40b) verbunden sind, um einen kontrollierten Bruch bei einer vorbestimmten Kraft bereitzustellen.

12. Mehrlagiges Haltegurtglied (200) für einen Fahrzeughaltegurt (202), umfassend:
einen ersten gefalteten Abschnitt (204) mit einer Anzahl von Lagen aus wellenförmig gefaltetem Haltegurtmaterial (22), die nebeneinander gefaltet sind, um einen mehrschichtigen Aufbau (33) zu bilden, wobei der mehrschichtige Aufbau (33) des gefalteten Abschnitts mindestens eine Naht (42), die die Anzahl von Lagen miteinander verbindet, aufweist und **gekennzeichnet durch** ein durch die Mitte des ersten gefalteten Abschnitts (204) gebildetes Loch (34) zur Befestigung an einem Fahrzeugteil (216), und
einen zweiten gefalteten Abschnitt (206) mit einer Anzahl von Lagen aus gewunden gefaltetem Haltegurtmaterial (22), die nebeneinander gefaltet sind, um einen geschichteten Aufbau (33) zu bilden, wobei der geschichtete Aufbau (33) des gefalteten Abschnitts mindestens eine Naht (42), die die Anzahl von Lagen miteinander verbindet, und ein durch die Mitte des zweiten gefalteten Abschnitts (206) gebildetes Loch (34) zur Befestigung an einem Fahrzeugteil (216) aufweist.

13. Mehrlagiges Haltegurtglied (200) nach Anspruch 12, wobei das Loch (34) in dem ersten gefalteten Abschnitt (204) und das Loch (34) in dem zweiten gefalteten Abschnitt (206) durch Ultraschall geformt werden oder wobei das Haltegurtmaterial (22) aus einem Polyester- oder Mylarmaterial besteht, das mit einem Heißmesser geschnitten wird, um ein Ausfransen zu verhindern.

14. Mehrlagiges Haltegurtglied (200) nach Anspruch 12, wobei der zweite gefaltete Abschnitt (206) sowohl einen Teil des Haltegurtmaterials (22) enthält, der zweimal auf das Haltegurtmaterial (22) zurückgefaltet und zusammengenäht ist, um eine dreilagige Konstruktion (33) zu bilden.

15. Mehrlagiges Haltegurtglied nach Anspruch 12, wobei die mindestens eine Naht (42) des ersten gefalteten Abschnitts (204) und die mindestens eine Naht (42) des zweiten gefalteten Abschnitts (206) jeweils mindestens zwei enge Nahtabschnitte (44a, 44b) umfassen, die durch mindestens einen Lastübertragungsnahtabschnitt (46a, 46b) verbunden sind, um einen kontrollierten Bruch bei einer vorbestimmten Kraft zu schaffen.

## Revendications

1. Liaison de longe multicouche (10) pour une longe de véhicule (12) comprenant : un matériau de courroie de longe (22), **caractérisée en ce qu'**elle a une section de coin pliée (18) formée par le matériau de courroie de longe (22) qui est plié de manière sinueuse autour d'au moins une portion de coin (24a, 24b), le matériau de courroie de longe (22) et ladite au moins une portion de coin (24a, 24b) étant cousus ensemble avec au moins un point de couture (36) pour former une construction en couches (26), et un trou (28) étant formé à travers la construction en couches (26) à des fins de fixation à une partie de véhicule (16).

2. Liaison de longe multicouche (10) selon la revendication 1, comprenant une section pliée (20) ayant une pluralité de couches constituées d'un matériau de courroie de longe (22) plié de manière sinueuse, pliées de manière adjacente pour former une construction en couches (33), la construction en couches (33) de la section pliée (20) incluant au moins un point de couture (42) connectant la pluralité de couches les unes aux autres, et un trou (34) formé à travers le centre de la section pliée (20) à des fins de fixation à une partie de véhicule (16).

3. Liaison de longe multicouche (10) selon la revendication 1 ou 2, dans laquelle ladite au moins une portion de coin (24a, 24b) a une portion plate (32) et une portion à extrémité élargie (30), le matériau de courroie de longe (22) étant enroulé autour de la portion à extrémité élargie (30) et le trou (28) étant formé à travers la portion plate (32).

4. Liaison de longe multicouche (10) selon la revendication 1 ou 2, comprenant en outre :
dans laquelle ladite au moins une portion de coin (24a, 24b) de la section de coin pliée (18) inclut une première portion de coin (24a) et une seconde portion de coin (24b), une première extrémité (14a) du matériau de courroie de longe (22) étant enroulée autour de la première portion de coin (24a) et une seconde extrémité (14b) du matériau de courroie de longe (22) étant enroulée autour de la seconde portion de coin (24b), et la première portion de coin (24a) avec le matériau de courroie de longe (22) de la première extrémité (14a) sont placés de manière adjacente dans la seconde portion de coin (24b) avec le matériau de courroie de longe (22) de la seconde extrémité (14b) enroulé autour de la seconde portion de coin (24b) pour créer la construction en couches (26), et
le trou (28) est formé à travers la construction en couches (26).

5. Liaison de longe multicouche (10) selon la revendication 4, dans laquelle la première portion de coin (24a) et la seconde portion de coin (24b) ont chacune une portion plate (32) et une portion à extrémité élargie (30), la première extrémité (14a) du matériau de courroie de longe (22) étant enroulée autour de la portion à extrémité élargie (30) de la première portion de coin (24a) et le trou (28) étant formé à travers la portion plate (32), la seconde extrémité (14b) du matériau de courroie de longe (22) étant enroulée autour de la portion à extrémité élargie (30) de la seconde portion de coin (24b) et le trou (28) étant formé à travers la portion plate (32).

6. Liaison de longe multicouche (10) selon la revendication 1, dans laquelle ledit au moins un point de couture (36) de la construction en couches (26) peut être libéré si le matériau de courroie de longe (22) est soumis à une quantité de force prédéterminée.

7. Liaison de longe multicouche (10) selon la revendication 1 ou 2, dans laquelle le trou (28) dans la section de coin pliée (18) est formé par ultrasons, ou dans laquelle le trou (28) dans la section de coin pliée (18) et le trou (34) dans la section pliée (20) sont formés par ultrasons.

8. Liaison de longe multicouche (10) selon la revendication 1 ou 2, dans laquelle le matériau de courroie de longe (22) est l'un d'un polyester ou d'un matériau Mylar qui est coupé avec un couteau thermique pour empêcher la formation de franges.

9. Liaison de longe multicouche (10) selon la revendication 2, dans laquelle la section pliée (20) inclut une portion du matériau de courroie de longe (22) qui est pliée deux fois vers l'arrière sur le matériau de courroie de longe (22) et cousue ensemble pour former une construction en trois couches (33).

10. Liaison de longe multicouche (10) selon la revendication 9, dans laquelle le trou (34) dans la section pliée (20) est découpé par ultrasons à travers la construction en trois couches (33).

11. Liaison de longe multicouche (10) selon la revendication 1 ou 2, dans laquelle ledit au moins un point de couture (36) sur la section de coin pliée (18) inclut au moins deux sections de points de couture serrés (38a, 38b) jointes par au moins une section de points de couture de transfert de charge (40a, 40b) pour assurer une rupture contrôlée à une force prédéterminée.

12. Liaison de longe multicouche (200) pour une longe de véhicule (202) comprenant :
une première section pliée (204) ayant une pluralité de couches constituées d'un matériau de courroie de longe (22) plié de manière sinueuse, pliées de manière adjacente pour former une construction en couches (33), la construction en couches (33) de la section pliée incluant au moins un point de couture (42) connectant la pluralité de couches les unes aux autres, et
**caractérisée par**
un trou (34) formé à travers le centre de la première section pliée (204) à des fins de fixation à une partie de véhicule (216), et par
une seconde section pliée (206) ayant une pluralité de couches constituées d'un matériau de courroie de longe (22) plié de manière sinueuse, pliées de manière adjacente pour former une construction en couches (33), la construction en couches (33) de la section pliée incluant au moins un point de couture (42) connectant la pluralité de couches les unes aux autres, et un trou (34) formé à travers le centre de la seconde section pliée (206) à des fins de fixation à une partie de véhicule (216).

13. Liaison de longe multicouche (200) selon la revendication 12, dans laquelle le trou (34) dans la première section pliée (204) et le trou (34) dans la seconde section pliée (206) sont formés par ultrasons, ou dans laquelle le matériau de courroie de longe (22) est l'un d'un polyester ou d'un matériau Mylar qui est coupé avec un couteau thermique pour empêcher la formation de franges.

14. Liaison de longe multicouche (200) selon la revendication 12, dans laquelle la seconde section pliée (206) inclut une portion du matériau de courroie de longe (22) qui est pliée deux fois vers l'arrière sur le matériau de courroie de longe (22) et cousue ensemble pour former une construction en trois couches (33).

15. Liaison de longe multicouche selon la revendication 12, dans laquelle ledit au moins un point de couture (42) de la section de coin pliée (204) et ledit au moins un point de couture (42) de la seconde section pliée (206) incluent chacun au moins deux sections de points de couture serrés (44a, 44b) jointes par au moins une section de points de couture de transfert de charge (46a, 46b) pour assurer une rupture contrôlée à une force prédéterminée.
